(19) **Europäisches Patentamt / European Patent Office / Office européen des brevets**

(11) **EP 3 929 542 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **20182643.5**

(22) Anmeldetag: **26.06.2020**

(51) Internationale Patentklassifikation (IPC):
***G01F 25/00*** *(2022.01)* ***G01F 25/17*** *(2022.01)*
***G01F 1/66*** *(2022.01)*

(52) Gemeinsame Patentklassifikation (CPC):
**G01F 25/17;** G01F 1/66

(54) **PRÜFEN EINES ULTRASCHALLDURCHFLUSSMESSERS**

TESTING AN ULTRASOUND FLOW METER

VÉRIFICATION D'UN DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.12.2021 Patentblatt 2021/52**

(73) Patentinhaber: **SICK Engineering GmbH**
**01458 Ottendorf-Okrilla (DE)**

(72) Erfinder:
- **Oberländer, Martin**
  **01099 Dresden (DE)**
- **Riedel, Ekkehard**
  **01109 Dresden (DE)**
- **Schlicke, Arnd**
  **01906 Burkau (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
WO-A1-96/00375            WO-A1-2013/006090
DE-A1- 4 421 692        DE-A1- 19 605 652
DE-A1- 19 843 806      DE-A1-102008 026 620
US-A1- 2009 007 625

**Beschreibung**

Die Erfindung betrifft eine Prüfvorrichtung für einen Ultraschalldurchflussmesser und ein Verfahren zum Prüfen und/oder Kalibrieren eines Ultraschalldurchflussmessers nach dem Oberbegriff von Anspruch 1 beziehungsweise 13.

Ein bewährtes Verfahren zum Messen der Strömungsgeschwindigkeit oder des Durchflusses ist das Differenzlaufzeitverfahren. Dabei wird ein Paar Ultraschallwandler am Außenumfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und empfangen. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt genauer zu erfassen.

Ultraschalldurchflussmessgeräte messen Fließgeschwindigkeiten ohne mechanische Komponenten. Dank dieser Eigenschaft wird die Messung auch bei kleinsten Strömungsgeschwindigkeiten und sogar in Ruhe möglich. Das wechselseitige Senden und Empfangen der Signale, die Laufzeitdifferenzbildung und die Berechnung der Strömungsgeschwindigkeit erfolgt im ruhenden Fluid mit den gleichen physikalischen Übertragungswegen und Wirkprinzipien wie bei höheren Strömungsgeschwindigkeiten.

Im Umkehrschluss bedeutet dieses Verhalten, dass Ultraschalldurchflussmessgeräte durch eine Messung im ruhenden Fluid auf ihre korrekte Funktion hin geprüft werden können. Dazu wird eine Spezialkammer eingesetzt, in der sich ein bekanntes Fluid in Ruhe beziehungsweise bei Strömungsgeschwindigkeit Null befindet, im einfachsten Fall Luft. Eine solche Vorrichtung kann als Nullpunktbox bezeichnet werden.

Zur Prüfung eines Ultraschalldurchflussmessgeräts werden dementsprechend Nullpunktmessungen durchgeführt, d.h. das Ultraschalldurchflussmessgerät bestimmt die Strömungsgeschwindigkeit und die Schallgeschwindigkeit in der Nullpunktbox. Damit können Geräte geprüft, aber auch die sondenspezifischen Systemlaufzeiten erfasst und das Ultraschalldurchflussmessgerät damit (re-)kalibriert werden.

Nullpunktboxen bisheriger Bauart benötigen jedoch lange Beruhigungszeiten, ehe sich tatsächlich eine Strömung Null eingestellt hat, und sie sind empfindlich auf äußere Einflüsse wie Temperaturänderungen, Druckschwankungen, Schlag und Stoß. Außerdem sind die Messungen zum Teil durch von der Nullpunktbox selbst verursachte Messartefakte nicht ganz zuverlässig.

Die WO 2013/006090 A1 beschreibt ein Kalibrationsverfahren für Ultraschalldurchflussmessgeräte. Dazu wird im ersten Schritt die Referenz-Schallgeschwindigkeit mit dem nicht strömenden Medium bestimmt. Die Kalibration geschieht jedoch im Feld bei in der Leitung montiertem Gerät, die Strömung wird zunächst durch ein Sperrventil angehalten. Eine Nullpunktbox ist demnach nicht vorgesehen.

In der US 5 277 070 A sind den Ultraschallwandlern für eine Kalibration bei ruhendem Gas (zero flow) jeweils Referenzziele zugeordnet. Auch hier wird dafür keine Nullpunktbox genutzt.

Aus der EP 3 521 773 A1 ist eine Ultraschall-Durchflussmessvorrichtung bekannt, in der die Ultraschallwandler derart positioniert werden, dass in dem Empfangssignal jeweils ein bestimmter Teilpuls zeitlich isoliert ist. Das betrifft die eigentliche Durchflussmessung, mit einer Kalibration ist die EP 3 521 773 A1 nicht befasst.

Die WO96/00375 A1 offenbart einen Ultraschall-Durchflussmesser mit kontinuierlicher Nullfluss-Kalibrierung. Zusätzlich zu dem eigentlichen Strömungskanal ist ein parallel dazu geführter Nullfluss-Messkanals mit ruhendem Medium vorgesehen. Ein Ultraschallwandlerpaar durchschallt beide Kanäle und kompensiert die Messung im Strömungskanal mit derjenigen im Nullfluss-Messkanal. Der Ultraschallweg im Messkanal verläuft durch mehrere Reflexionen W-förmig und ist daher länger. Deshalb werden die Ultraschallsignale aus dem Nullfluss-Messkanal und dem Strömungskanal zeitlich separiert empfangen.

Die DE 10 2008 026 620 A1 beschreibt ein Verfahren zur Kalibrierung eines UltraschallDurchflussmessers. Dabei werden Zeiten gemessen, die ein Ultraschall-Impuls auf direktem Weg sowie unter einmaliger oder mehrfacher Reflexion zwischen UltraschallSender und Ultraschall-Empfänger benötigt und daraus eine systembedingte Verzögerungszeit bestimmt.

Die US 2009 007 625 A1 offenbart ein Kalibriersystem mit einer Sonde zum Einführen in eine Leitung, in der Flüssigkeit fließt, und einem mit der Sonde verbundenen Verarbeitungssubsystem, das so konfiguriert ist, dass es die Schallgeschwindigkeit in der Flüssigkeit berechnet und einen Schallgeschwindigkeitskorrekturfaktor an den Durchflussmesser ausgibt. Die Sonde umfasst mindestens zwei Wandler, die in einem festen Abstand voneinander angeordnet sind, und mindestens eine Öffnung, durch die das Fluid durch die Sonde fließen kann.

Es ist daher Aufgabe der Erfindung, das Prüfen oder Kalibieren eines Ultraschalldurchflussmessers zu verbessern.

Diese Aufgabe wird durch eine Prüfvorrichtung für einen Ultraschalldurchflussmesser und ein Verfahren zum Prüfen und/oder Kalibrieren eines Ultraschalldurchflussmessers nach Anspruch 1 beziehungsweise 13 gelöst. Hierbei bedeutet Prüfen die Feststellung, ob der Ultraschalldurchflussmesser ein Messergebnis ausgibt, das unter den kontrollierten Bedingungen der Prüfvorrichtung erwartet wird, wohingegen Kalibrieren das (erneute) Einstellen von Parametern umfasst, um dieses Ziel zu erreichen, etwa um systemspezifische Laufzeiten zu messen und zu kompensieren. Beides kann schon bei der Herstellung oder im Feld bei Wartungen erfolgen.

In einer Prüfkammer befindet sich ein Fluid, bei dem es sich um das später zu messende Fluid oder vorzugsweise einfach um Luft handeln kann. Das Fluid ruht, die Strömungsgeschwindigkeit ist demnach Null (zero flow). Geprüft wird der Nullpunkt beziehungsweise ein Messergebnis des Ultraschalldurchflussmessers bei einer Strömungsgeschwindigkeit Null. Die Prüfvorrichtung kann demnach als Nullpunktbox wie einleitend vorgestellt bezeichnet werden. Die Prüfkammer weist zwei Montageplätze auf, an denen jeweils ein Ultraschallwandler eines zu prüfenden Ultraschallwandlers vorzugsweise abgedichtet montiert wird. Die Montageplätze befinden sich vorzugsweise jeweils in einer Wand der Prüfkammer, um deren Abmessungen voll auszunutzen. Die Anordnung der Montageplätze gibt die Anordnung der Ultraschallwandler vor, die demnach einen definierten Ultraschallmesspfad auf der Verbindungslinie zueinander durch die Prüfkammer aufspannen.

Die Erfindung geht von dem Grundgedanken aus, die Geometrie der Prüfkammer so auszulegen, dass eine besonders genaue Nullpunktmessung möglich wird. Dabei komme es auf den Innenraum der Prüfkammer an, die Prüfvorrichtung selbst kann wegen Wandstärken, Anschlüssen und dergleichen eine abweichende Geometrie zeigen. Es werden bestimmte Anforderungen an die Pfadlänge oder die Länge L des Ultraschallmesspfades sowie den Abstand a des Ultraschallmesspfades zu den Seitenwänden der Prüfkammer gestellt und erfüllt. Dadurch wird das Nutzsignal von Störechos und sekundären Ultraschallsignalen zeitlich separiert. Länge L und Abstand a des Ultraschallmesspfades sind durch die Anordnung der Montageplätze bestimmt. Je nach Montage der Ultraschallwandler können sich noch gewisse Abweichungen insbesondere der Länge L ergeben, die als Toleranzen hingenommen oder durch eine Längenmessung und -parametrierung berücksichtigt werden. Die beiden geometrischen Bedingungen einer ausreichenden Länge L und eines ausreichenden Abstands a können einzeln oder kombiniert erfüllt sein.

Das Nutzsignal ist das direkte Ultraschallsignal, das von dem ersten Ultraschallwandler zu dem zweiten Ultraschallwandler auf deren Verbindungslinie propagiert. Die bezeichnete Reihenfolge von dem ersten Ultraschallwandler zu dem zweiten Ultraschallwandler erfolgt ohne Beschränkung der Allgemeinheit, zumal bei einem Differenzlaufzeitverfahren ohnehin auch eine Messung in der Gegenrichtung durchgeführt wird. Das direkte Ultraschallsignal ist aber nicht das einzige Signal, das der empfangende Ultraschallwandler registriert. Ein Teil des Ultraschalls wird reflektiert, kehrt zum sendenden Ultraschallwandler zurück und wird dort erneut teilweise reflektiert. Der empfangende Ultraschallwandler registriert deshalb auch ein Echo. Durch eine ausreichende Länge des Ultraschallmesspfads wird erfindungsgemäß sichergestellt, dass sich das Echo nicht mehr mit dem Nutzsignal überlagert. Spätere Echos nach dem ersten Echo sind schwach und erfüllen die Bedingung der zeitlichen Separierung erst recht.

Weitere Störsignale entstehen dadurch, dass das Ultraschallsignal nicht nur den Weg des Ultraschallmesspfades nimmt. Solche durch einfache oder mehrfache Reflexion an den Seitenwänden der Prüfkammer beziehungsweise eine zumindest teilweise Propagation durch die Wände selbst (Körperschall) den empfangenden Ultraschallwandler erreichende Anteile werden als sekundäre Ultraschallsignale bezeichnet. Durch ausreichenden Abstand a des Ultraschallmesspfades von den Seitenwänden wird erreicht, dass die sekundären Ultraschallsignale sich nicht mehr mit dem Nutzsignal überlagern.

Mit Seitenwänden sind diejenigen Wände der Prüfkammer gemeint, die sich an eine Wand eines Montageplatzes anschließen. Trotz der Formulierung im Plural kann es auch nur eine einzige Seitenwand geben. Der Abstand a sollte vorzugsweise zu allen Seitenwänden eingehalten werden. Als Beispiel sind bei einer quaderförmigen Prüfkammer die Montageplätze im Boden beziehungsweise Deckel angeordnet, die Seitenwände sind dann die verbleibenden vier Flächen des Quaders. Bei einem Zylinder ebenfalls mit Montageplätzen in Boden beziehungsweise Deckel gibt es nur eine Seitenwand, nämlich die Mantelfläche.

Die Erfindung hat den Vorteil, dass die Geometrie der Prüfkammer beziehungsweise die Anordnung der Montageplätze darin, die nur bei passender Geometrie überhaupt möglich wird, für ein separiertes und gut auswertbares Nutzsignal sorgt. Einflüsse durch Echos und sekundäre Ultraschallsignale auf weiteren Schallpfaden im Inneren der Prüfkammer wie von Körperschall durch die Wand wirken sich nicht mehr auf das Messergebnis aus. Durch ein kleines Volumen der Prüfkammer treten nur minimale Konvektionsströmungen in der Prüfkammer auf. Der strömungsberuhigte Zustand wird in kurzer Zeit erreicht. Durch die optimierte Gestaltung sowie weitere noch zu erläuternde Optimierungen, wird weiterhin der Einfluss von Temperatur und Druck auf das Gehäuseinnere minimiert, die Prüfvorrichtung ist unempfindlich gegenüber Änderungen der Umgebungstemperaturen, des Umgebungsdrucks sowie gegen Druckwellen und mechanische Einflüsse. Neben den Messwerten für die Strömungsgeschwindigkeit lassen sich auch Schallgeschwindigkeit, Auflösung und das grundsätzliche Messwertrauschen des Ultraschalldurchflussmessers prüfen.

Die Prüfkammer weist vorzugsweise ein minimales Volumen auf, d.h. die Abmessungen sind nur gerade so groß, dass die Bedingungen an Länge des Ultraschallmesspfades und Abstand des Ultraschallmesspfades zu den Seitenwänden erfüllt sind. Um das Nutzsignal zu separieren, sind die oben genannten Mindestabmessungen einzuhalten. Nach dieser bevorzugten Ausführungsform werden nun die Mindestabmessungen zugleich als Höchstabmessungen aufgefasst, demnach möglichst genau eingehalten. Das muss nur in praktischen Grenzen beziehungsweise mit einer gewissen Toleranz gelten, wobei die Prüfkammer im Zweifel besser etwas zu groß ausgelegt wird. Auf diese Weise kann das Volumen minimiert und eine besonders kleine Prüfkammer realisiert werden, ohne die Verbesserungen der Prüfung zu beeinträchtigen. Durch das kleine Volumen treten gibt es so gut wie keine Konvektionsströmungen, und die Prüfvorrichtung insgesamt wird besonders kompakt und handlich.

Die Montageplätze und folglich der Ultraschallmesspfad sind vorzugsweise mittig in der Prüfkammer angeordnet. Dadurch wird der Abstand a zu den Seitenwänden in alle Richtungen maximiert. Die Prüfkammer kann folglich besonders klein ausgelegt werden. In den schon verwendeten Beispielen eine Prüfkammer mit der Geometrie eines Quaders oder Zylinders liegt der Ultraschallmesspfad dann vorzugsweise auf einer Mittenachse durch Boden und Deckel.

Die durch den Abstand zwischen den Montageplätzen vorgegebene Länge L des Ultraschallmesspfades genügt vorzugsweise der Bedingung

$$L \geq s * \tau * n_\tau * \frac{c_0}{2}$$

, mit Schallgeschwindigkeit $c_0$, einem Sicherheitsfaktor s, insbesondere s =1,5, und Ultraschallsignalen mit $n_\tau$ Perioden der Periodendauer $\tau$. Ist diese Bedingung erfüllt, so kommen Echos erst am empfangenden Ultraschallwandler an, nachdem das Nutzsignal vorzugsweise vollständig und jedenfalls weitgehend empfangen wurde. Die Prüfvorrichtung ist damit für bestimmte Ultraschallsignale besonders gut geeignet, die Ultraschallpulse mit $n_\tau$ Perioden einer der Ultraschallfrequenz entsprechenden Periodendauer $\tau$ verwenden. Die gesendete Anzahl der Perioden kann übrigens auch höher sein als $n_\tau$, der Wert $n_\tau$ gibt dann die etwas schwächere Bedingung an, wie viele der möglicherweise größeren Anzahl tatsächlich vorhandener Perioden für eine robuste Messung erforderlich sind. Der Sicherheitsfaktor s schafft einen zeitlichen Zusatzabstand und dadurch eine gewisse Toleranz sowohl für abweichende Ultraschallsignale als auch sonstige Einflüsse. Als geeigneter Wert hat sich ungefähr s =1,5 erwiesen. Größere oder kleinere Werte sind aber auch denkbar, je nachdem, wie sicher eine Überlagerung ausgeschlossen beziehungsweise eine Restüberlagerung toleriert werden soll.

Der durch den Abstand der Montageplätze von den jeweiligen benachbarten Seitenwänden vorgegebene Abstand a des Ultraschallmesspfades zu den Seitenwänden genügt vorzugsweise der Bedingung

$$a \geq \sqrt{\frac{(c_0 * \tau * n_\tau * s + L)^2}{4}}$$

, mit Schallgeschwindigkeit $c_0$, einem Sicherheitsfaktor s, insbesondere s =1,5, und Ul-traschallsignalen mit $n_\tau$ Perioden der Periodendauer $\tau$. Ist diese Bedingung erfüllt, so kommen sekundäre Ultraschallsignale erst am empfangenden Ultraschallwandler an, nachdem das Nutzsignal vorzugsweise vollständig und jedenfalls weitgehend empfangen wurde. Zu den Variablen dieser Formel gelten die Ausführungen des Vorabsatzes. Mit L ist wie überall die Länge des Ultraschallmesspfades bezeichnet.

Die Prüfkammer weist vorzugsweise an ihren Wänden ein schalldämpfendes Material auf. Die Schalldämpfung kann durch das Material selbst und/oder durch dessen Strukturierung erreicht werden. Der Innenraum der Prüfkammer wird damit von äußeren Einflüssen geschützt. Außerdem werden Reflexionen und daraus resultierende sekundäre Ultraschallsignale gedämpft.

Die Prüfkammer weist bevorzugt nicht-ebene Seitenflächen auf und ist insbesondere zylinderförmig ausgebildet. Durch solche Seitenflächen wird der Einfluss von Druckschwankungen in der Prüfkammer reduziert. Bei einem Zylinder wird nicht nur das zu allen Seiten erreicht, sondern zugleich ein minimales Volumen möglich, bei dem ein mittiger Ultraschallmesspfad den Abstand a zu allen Seiten gleichermaßen einhält.

Die Prüfkammer ist bevorzugt aus einem nichtmetallischen Material hergestellt, insbesondere aus Kunststoff. Ein Material mit relativ geringer Dichte reduziert den Körperschall und auch das Gesamtgewicht der Prüfvorrichtung.

In der Prüfkammer ist vorzugsweise mindestens ein Trennelement angeordnet. Dadurch wird insbesondere das Innere der Prüfkammer in mehrere Teilvolumina unterteilt. So werden Konvektionsströmungen zusätzlich unterdrückt, weil sie sich jeweils nur in den Teilvolumina ausbilden können. Daher wird die angestrebte Strömungsgeschwindigkeit Null in kürzeren Beruhigungszeiten erreicht, und dieser Zustand wird robuster behalten beziehungsweise stellt sich nach Störungen sehr rasch wieder ein. Die Trennelemente sind vorzugsweise schalldurchlässig für die zu prüfenden Ultraschallsignale. Damit wird die Messung nicht beeinträchtigt. Alternativ können die Effekte der Trennelemente auch gemessen und kompensiert werden.

Die Prüfvorrichtung weist bevorzugt einen Drucksensor, einen Temperatursensor und/oder einen Feuchtigkeitssensor auf. Es können auch zunächst nur Bohrungen oder sonstige Öffnungen der Prüfkammer vorgesehen sein, um derartige Sensoren einzubringen. Dadurch werden Kenngrößen des Fluids in der Prüfkammer wie Druck, Temperatur und/oder Luftfeuchte gemessen, die Auswirkungen auf das Ausbreitungsverhalten des Ultraschalls in dem Fluid im Inneren der Prüfkammer haben.

Eine Steuer- und Auswertungseinheit der Prüfvorrichtung ist vorzugsweise dafür ausgebildet, eine Schallgeschwindigkeit für das Fluid in der Prüfkammer zu berechnen. Das geschieht vorzugsweise auf Grundlage der Messungen der soeben genannten Sensoren.

Nach dieser Berechnung ist ein Erwartungswert für die Schallgeschwindigkeit bekannt, der angezeigt oder intern für die Prüfung beziehungsweise Kalibrierung verwendet werden kann.

Die Prüfvorrichtung weist bevorzugt eine Schnittstelle auf, um Messwerte des Ultraschalldurchflussmessers zu empfangen, insbesondere eine gemessene Strömungsgeschwindigkeit oder Schallgeschwindigkeit, und/oder dem Ultraschalldurchflussmesser Parameter zu übergeben, insbesondere die Länge L des Ultraschallmesspfades. Die Prüfvorrichtung ist damit in der Lage, mit der Ultraschallmessvorrichtung zu kommunizieren. Das kann auch mittelbar über einen angeschlossenen PC, ein Tablet, ein Smartphone oder dergleichen geschehen. Es können einerseits Messwerte für die Prüfung oder Kalibrierung ausgelesen werden oder andererseits ein zu prüfender Ultraschalldurchflussmesser so eingestellt werden, dass die Prüfung oder Kalibrierung ermöglicht wird. Ein Parameter hierfür ist die Länge L des Ultraschallmesspfades. Es wäre auch denkbar, beispielsweise auf das verwendete Fluid in der Prüfkammer wie Luft zu parametrieren oder Messwerte der Sensoren mitzuteilen.

Eine Steuer- und Auswertungseinheit der Prüfvorrichtung ist bevorzugt dafür ausgebildet, eine in der Prüfkammer gemessene Strömungsgeschwindigkeit mit Null und/oder eine in der Prüfkammer gemessene Schallgeschwindigkeit mit einer erwarteten Schallgeschwindigkeit zu vergleichen. Diese Steuer- und Auswertungseinheit kann ein angeschlossenes Gerät sein, wie ein PC, ein Tablet, ein Smartphone oder dergleichen. Darin wird geprüft, ob der Ultraschalldurchflussmesser tatsächlich innerhalb der geforderten Messgenauigkeit eine Strömungsgeschwindigkeit Null misst oder ob die dafür erforderliche Schallgeschwindigkeit richtig bestimmt wurde. Die Steuer- und Auswertungseinheit kann bei Abweichung Parametervorschläge für eine (Re-)Kalibrierung machen, besonders bevorzugt in einer Regelschleife, die automatisch dafür sorgt, das der Ultraschalldurchflussmesser am Ende die Prüfung besteht.

Die Montageplätze sind bevorzugt an gegenüberliegenden Wänden der Prüfkammer angeordnet. Dadurch entsteht ein geradliniger, ununterbrochener Ultraschallmesspfad. Beispielsweise werden die Ultraschallwandler einander gegenüberliegend und zueinander weisend in Boden und Deckel einer mit der Geometrie eines Quaders oder Zylinders gestalteten Prüfkammer angebracht.

Die Montageplätze sind alternativ an derselben Wand der Prüfkammer angeordnet, und ein Ultraschallreflektor ist an der gegenüberliegenden Wand der Prüfkammer angeordnet. Das ergibt einen geknickten Ultraschallmesspfad über den Ultraschallreflektor. Die Ultraschallwandler sind weiterhin aufeinander gerichtet, nun jedoch vermittelt durch den Ultraschallreflektor. Der Ultraschallwandler kann in die gegenüberliegende Wand integriert oder ein Abschnitt davon sein, beispielsweise indem dort lokal kein schalldämpfendes Material beziehungsweise keine schalldämpfende Struktur vorgesehen ist.

Die Prüfvorrichtung ist bevorzugt zweiteilig mit einem ersten Teil und einem zweiten Teil der Prüfkammer ausgebildet, so dass diese geöffnet und geschlossen werden kann. Das ermöglicht einen besonders einfachen Zugang, um die Ultraschallwandler in den Montageplätzen anzubringen beziehungsweise Ultraschallwandler zu tauschen. Dabei ist eine Gestaltung mit Deckel ebenso möglich wie ein echt zweiteiliges Design, bei dem die Prüfkammer in zwei Teile auseinandergenommen werden kann.

Die Prüfvorrichtung weist bevorzugt Abmessungen und ein Gewicht auf, mit der sie von einer Person aus eigener Kraft transportiert werden kann. Ein Servicetechniker kann die Prüfvorrichtung somit problemlos mit sich führen und bei Bedarf im Feld einsetzen. Ein herkömmlicher Prüf- oder Kalibrierstand für Ultraschalldurchflussmesser dagegen ist in der Regel fest montiert und so groß und schwer, dass eine Person ihn gar nicht bewegen könnte.

Bei dem erfindungsgemäßen Verfahren zum Prüfen und/oder Kalibrieren werden die Ultraschallwandler des zu prüfenden Ultraschalldurchflussmessers in einer Prüfkammer, in der sich ein Fluid bei Strömungsgeschwindigkeit Null befindet, an den vorgesehenen Montageplätzen montiert. Dann wird mit dem Ultraschalldurchflussmesser die Strömungsgeschwindigkeit und/oder die Schallgeschwindigkeit in der Prüfkammer gemessen. Durch die Geometrie der Prüfkammer und die erläuterten Anforderungen an die Länge L und/oder den Abstand a des Ultraschallmesspfades wird dabei das Nutzsignal zeitlich separiert empfangen. Das Verfahren wird besonders bevorzugt mit einer Ausführungsform der erfindungsgemäßen Prüfvorrichtung durchgeführt.

Die Prüfung, ob die Messwerte innerhalb der erlaubten Messungenauigkeit liegen, erfolgt durch den Servicetechniker oder automatisch in einer Steuer- und Auswertungseinheit der Prüfvorrichtung, beispielsweise indem der Servicetechniker einen Computer oder ein entsprechendes tragbares Gerät anschließt. Vorzugsweise konfiguriert der Servicetechniker vorab den Ultraschalldurchflussmesser für die Verhältnisse in der Prüfkammer, insbesondere die Länge L des Ultraschallmesspfades. Außerdem wird vorzugsweise nach dem Montieren der Ultraschallwandler für einen Ausgleichszeitraum gewartet, bis das Fluid in der Prüfkammer zur Ruhe kommt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1   eine schematische Darstellung einer Prüfvorrichtung und der geometrischen Verhältnisse
         von deren Prüfkammer;

Fig. 2   eine schematische Darstellung zur Auswertung
         der Prüfergebnisse;

Fig. 3   eine weitere schematische Darstellung einer
         Prüfvorrichtung zur Erläuterung von Echos und
         sekundären Schallpfaden;

Fig. 4   eine beispielhafte Darstellung eines empfangenen Ultraschallsignals mit Nutzsignal und Störungen;

Fig. 5   eine schematische Darstellung einer Prüfvorrichtung mit einem alternativen reflexiven Ultraschallmesspfad; und

Fig. 6   eine schematische Darstellung einer Prüfvorrichtung mit Trennelementen zur Unterteilung
         des Volumens in der Prüfkammer.

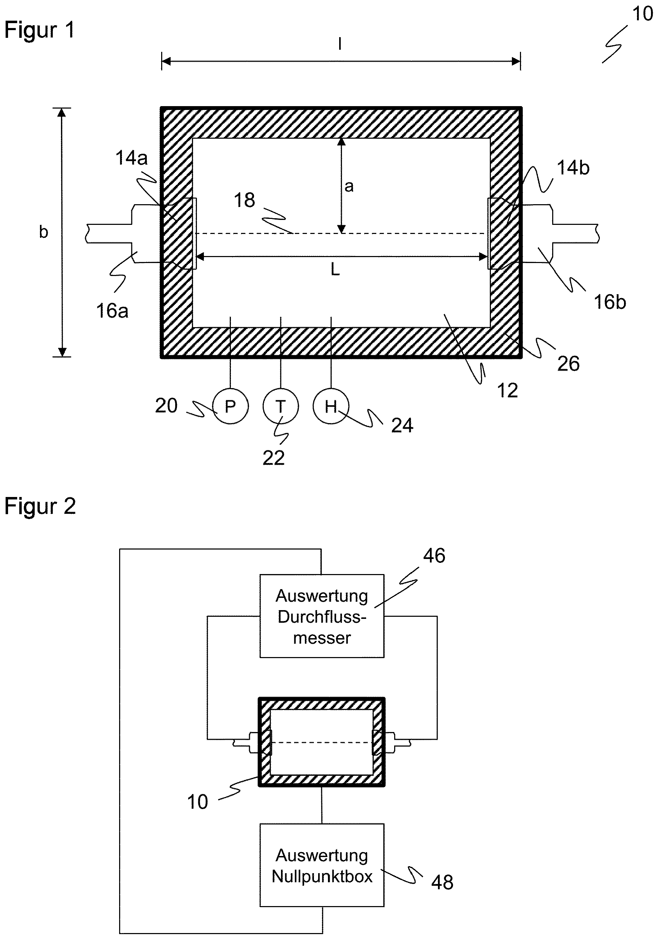

Figur 1 zeigt eine schematische Darstellung einer Prüfvorrichtung 10 für einen Ultraschalldurchflussmesser. Die Prüfvorrichtung 10 kann in der Fertigung oder im Feld eingesetzt werden, um Ultraschalldurchflussmesser zu prüfen oder zu kalibrieren. Die Prüfvorrichtung 10 weist eine Prüfkammer 12 auf, in der sich ein ruhendes Fluid befindet. Das Fluid kann einfach Luft entsprechend der Umgebung der Prüfvorrichtung 10 sein, es wäre aber auch denkbar, ein anderes Fluid einzufüllen. Um in den Innenraum der Prüfkammer 12 eingreifen zu können, ist sie vorzugsweise zweiteilig gestaltet, sei es mit Deckel oder mit zwei separierbaren Hälften.

Die Prüfkammer 12 hat eine Länge l und eine Breite b. In der nicht erkennbaren Tiefenrichtung entspricht die Ausdehnung vorzugsweise ebenfalls der Breite b. Die Strömungsgeschwindigkeit beträgt demnach Null (zero flow), und es wird bei der Prüfung erwartet, dass der Ultraschalldurchflussmesser das auch so misst. Es handelt sich demnach um eine Nullpunktmessung beziehungsweise einen Nullpunktabgleich.

An zwei gegenüberliegenden Wänden der Prüfkammer 12 ist jeweils ein Montageplatz 14a-b für einen Ultraschallwandler 16a-b vorgesehen. Darin montierte Ultraschallwandler 16a-b weisen aufeinander zu und spannen auf der Verbindungslinie einen Ultraschallmesspfad 18 der Länge L auf. Zu den Seitenwänden der Prüfkammer 12 beträgt der Abstand a. Der bei einem Ultraschalldurchflussmesser nach dem Differenzlaufzeitverfahren notwendige Versatz der Ultraschallwandler 16a-b in Strömungsrichtung entfällt, da es keine Strömung gibt.

Die Prüfvorrichtung 10 weist einen Drucksensor 20, einen Temperatursensor 22 und einen Feuchtesensors 24 auf. Sie können in die Prüfkammer 12 integriert sein, oder diese weist entsprechende Öffnungen auf, um die Sensoren 20, 22, 24 auch nachträglich einzubringen. Die genannten Sensoren 20, 22, 24 bestimmen Kenngrößen, die sich auf die Ausbreitungsgeschwindigkeit von Ultraschall auswirken. Dennoch ist auch eine abweichende Auswahl von Sensoren denkbar.

Für eine optimale Messung sollte die Prüfkammer 12 gegenüber äußeren Einflüssen wie Stoß, Temperatur- und Druckschwankungen gut isoliert sein. Ansonsten würden Ausgleichsströmungen im Inneren der Prüfkammer 12 angeregt, die entweder das Messergebnis verfälschen oder die Prüfzeit verlängern, um jeweils eine Beruhigung des Fluids zu ermöglichen.

Eine vorteilhafte Maßnahme, die Druckschwankungen in der Prüfkammer 12 reduziert, ist die Vermeidung gerade Flächen an den Außenseiten. Besonders geeignet dafür ist eine Zylinderform der Prüfkammer 12, wobei dieser Zylinder in Figur 1 im Längsschnitt mit Boden- und Deckfläche rechts und links gezeigt wäre. Alternativ ist aber auch eine Quaderform vorzugsweise mit gekrümmten Seitenflächen oder eine sonstige Form denkbar.

Die Prüfkammer 12 sollte möglichst klein bleiben, um Konvektionsströmungen zu minimieren, die mit wachsendem Volumen des Innenraums in ihrer Stärke zunehmen. Dadurch wird auch die Prüfvorrichtung 10 als Ganzes kompakter. Wie später erläutert, ist jedoch andererseits für eine genaue Messung ein Minimalvolumen erforderlich. Die Erfindung ermöglicht hier einen optimalen Kompromiss.

Als Material für die Wände der Prüfkammer 12 ist ein Nichtmetall von Vorteil. Aufgrund der geringeren Dichte wird eine eventuelle Schallrückkopplung, also Ankopplung des Ultraschalls in die Wand und Einkopplung am empfangenden Ultraschallwandler 16a-b, weitestgehend ausgeschlossen. Vorteilhafterweise weisen die Wände und insbesondere die Innenwand der Prüfkammer 12 ein schalldämpfendes Material 26 auf. Das reduziert die Amplitude von dort reflektiertem Ultraschall deutlich. Zugleich ergibt sich eine zusätzliche thermische Isolierung des Fluids in der Prüfkammer 12 und ein gewisser Schutz vor Druckschwankungen und mechanischen Einflüssen. Das schalldämpfende Material 26 ist beispielsweise ein schallabsorbierender Schaum.

Die mechanische Aufhängung der Ultraschallwandler 16a-b ist vorzugsweise derart gestaltet, dass Rückkopplungen des Ultraschallsignals über die Wände der Messkammer 12 ("Körperschall") unterdrückt werden. Sie würden sonst das Messsignal überlagern und zu zusätzlichen Messfehlern führen würden. Zudem werden vorzugsweise die Ultraschallwandler 16a-b in den Montageplätzen 14a-b abgedichtet montiert.

Figur 2 zeigt schematisch und beispielhaft, wie die Prüfvorrichtung 10 zum Prüfen an Auswertungselektronik angeschlossen werden kann. Der zu prüfende Ultraschalldurchflussmesser mit den beiden Ultraschallwandlern 16a-b weist zunächst eine eigene Steuer- und Auswertungseinheit 46 auf. Das ist dessen Messelektronik, mit der Laufzeiten und daraus mit einem Differenzlaufzeitverfahren die Strömungsgeschwindigkeit sowie weitere zu prüfende Messgrößen bestimmt werden. Außerdem ist die Prüfvorrichtung 10 an eine weitere Steuer- und Auswertungseinheit 48 zur Durchführung der Prüfung angeschlossen. Diese weitere Steuer- und Auswertungseinheit 48 kann in die Prüfvorrichtung 10 integriert oder ein daran angeschlossener Rechner sein, etwa ein PC, ein Tablet oder ein Smartphone. Auch Remote-Anschluss über ein Netzwerk ist denkbar.

Das Verfahren zum Prüfen oder Kalibrieren eines Ultraschalldurchflussmessers läuft wie folgt ab. Die Prüfkammer 12 wird geöffnet, und die Ultraschallwandler 16a-b werden darin an den vorgesehenen Montageplätzen 14a-b montiert. Es wird die Länge L bestimmt und im Ultraschalldurchflussmesser konfiguriert. Anschließend wird die Prüfkammer 12 wieder geschlossen. Nach einem Ausgleichszeitraum, der durch die noch zu erläuternde erfindungsgemäße Ausgestaltung kurz bleiben kann, beispielsweise lediglich fünf Minuten, werden mittels der Sensoren 20, 22, 24 Druck, Temperatur und Luftfeuchte gemessen. Daraus wird eine theoretisch zu erwartende Schallgeschwindigkeit beispielsweise nach dem Verfahren von Owen Cramer bestimmt.

Dann werden mittels der Ultraschallwandler 16a-b die Strömungsgeschwindigkeit und vorzugsweise auch die Schallgeschwindigkeit gemessen. Das wird beispielsweise mit der weiteren Steuer- und Auswertungseinheit 48 aufgezeichnet und ausgewertet. Die Prüfkammer 12 ist so konstruiert, dass Strömungsfluktuation und Temperaturbeeinflussung weitestgehend minimiert sind. Aus diesem Grund muss das Gerät bei einwandfreier Funktion eine Strömungsgeschwindigkeit 0 m/s und die theoretisch berechnete Schallgeschwindigkeit ermitteln, wobei für beides Toleranzen oder zulässige Messungenauigkeiten vorgegeben sein können. Es ist in einer bevorzugten Ausführungsform denkbar, anhand einer Abweichung auf die Parametrierung des Ultraschalldurchflussmessers einzuwirken und ihn so zu (re-)kalibrieren.

Neben den beschriebenen Messgrößen Strömungsgeschwindigkeit und Schallgeschwindigkeit oder an deren Stelle können auch weitere Messgrößen geprüft werden, wie Empfangsverstärkung, Signalrauschabstand und Signalqualität.

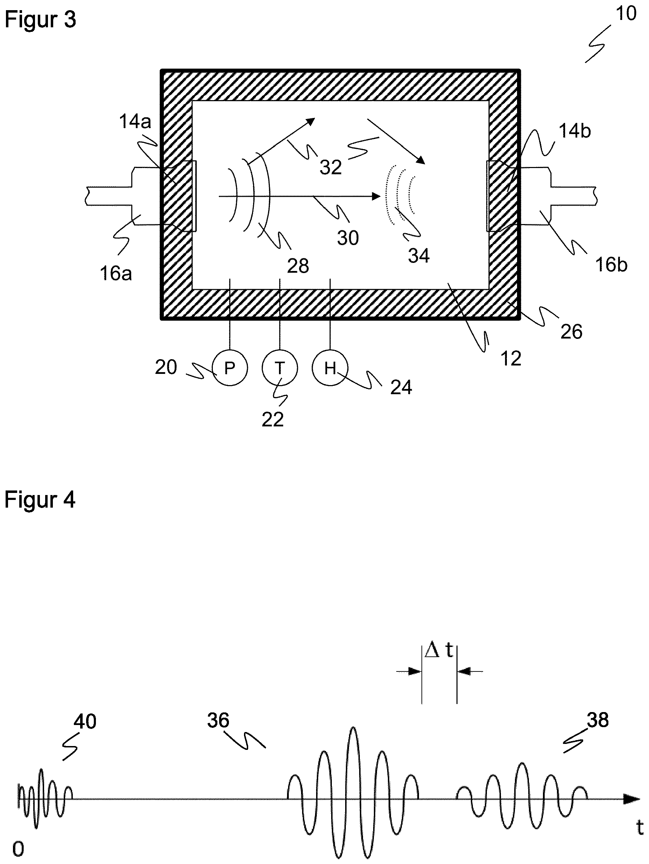

Figur 3 zeigt eine weitere schematische Darstellung der Prüfvorrichtung 10, um die verschiedenen Schallpfade des Ultraschallsignals 28 zu illustrieren. Ein primärer Schallpfad 30 verläuft auf dem vorgesehenen Ultraschallmesspfad 18 zwischen den Ultraschallwandlern 16a-b. Auf dem primären Schallpfad 30 erreicht das Ultraschallsignal 28 direkt den gegenüberliegenden Ultraschallwandler 16b-a. Das ist das Nutzsignal, mit dem die Messung der Laufzeit und darauf basierend die Berechnung der Strömungsgeschwindigkeit erfolgt.

Neben dem Nutzsignal von dem vorgesehenen direkten Ausbreitungsweg des primären Schallpfads 30 gibt es jedoch immer weitere Signalanteile durch Teile des Ultraschallsignals 28, die nicht unmittelbar von dem einen Ultraschallwandler 16a-b zu dem anderen Ultraschallwandler 16b-a propagieren. Das liegt zum einen an sekundären Schallpfaden 32, also Ausbreitungswegen, die durch Reflexionen des Ultraschallsignals 28 an den Wänden der Prüfkammer zustande kommen. Ursache dafür ist die kegelförmige Abstrahlcharakteristik der Ultraschallwandler 16a-b, die auch Schallanteile seitlich in Richtung der Wand aussendet. Diese Anteile werden dann ein- oder mehrfach an der Wand reflektiert und können so ebenfalls als sekundäre Ultraschallsignale in dem empfangenden Ultraschallwandler 16b-a registriert werden. Darüber hinaus treten auch Echos 34 auf. Das sind Signalanteile, die zunächst an dem empfangenden Ultraschallwandler 16b-a oder der umgebenden Wand und dann auf Seiten des sendenden Ultraschallwandlers 16a-b erneut reflektiert werden.

Im Empfangssignal überlagern Nutzsignal, sekundäre Ultraschallsignale und Echo einander. Ein solches zeitabhängiges Empfangssignal ist beispielhaft in Figur 4 illustriert.

Das Nutzsignal 36 hat den kürzesten Weg und wird daher zuerst empfangen. Später kommen dann sekundäre Ultraschallsignale und Echos hinzu, die hier stellvertretend durch ein Störsignal 38 gezeigt sind. Es kann auch noch parasitäre Signalanteile 40 zu der gezeigten Zeit oder zu anderen Zeiten geben. Das wird beispielsweise durch Signalübersprechen oder Körperschall verursacht. Diese parasitären Signalanteile 40 sind in der Regel sogar noch früher anzutreffen als das Nutzsignal 36.

Bei ungünstigen Verhältnissen kommen Störsignale 38 so früh an, dass sie das Nutzsignal 36 noch überlagern. Dann kommt es zu einer Störung der Laufzeitmessung und damit zu Fehlern bei der Bestimmung von Strömungs- und Schallgeschwindigkeit. Gewünscht ist daher eine klare zeitliche Separation, wie sie in Figur 4 durch den Abstand Δt angedeutet ist.

Erfindungsgemäß wird durch die geometrischen Verhältnisse der Prüfkammer 12 für eine ausreichende zeitliche Separation gesorgt. Neben der Geometrie spielen auch die Abstrahlcharakteristik der Ultraschallwandler 16a-b, die Ultraschallfrequenz, die Schallgeschwindigkeit und die Anzahl der Signalperioden eine Rolle. Die Geometrie kann für bestimmte Fluide, Typen von Ultraschallwandlern und/oder Ultraschallsignale optimiert sein. Durch eine möglichst allgemeingültige Wahl, etwa Luft als Fluid, eine größte zulässige Abstrahlcharakteristik, bestimmte Ultraschallbänder und Höchstanzahlen von Signalperioden, sowie durch Sicherheits- oder Toleranzpuffer ist jedoch eine optimierte Geometrie für eine große Klasse von Ultraschalldurchflussmessern geeignet.

Besonders großen Einfluss auf eine optimale Geometrie haben die beiden Parameter Länge L des Ultraschallmesspfades 18 und dessen Abstand a zu den seitlichen Wänden der Prüfkammer. Diese beiden Größen L, a wurden in Figur 1 eingeführt. Nun sollen vorteilhafte Minimalvorgaben hierfür diskutiert werden, die in minimalen Abmessungen für die Größe des Innenraums der Prüfkammer 12 resultieren.

Die Länge L und damit der Abstand zwischen den Ultraschallwandlern 16a-b sollte mindestens so groß sein, dass parasitäre Signalanteile 40 durch parasitäre Effekte wie Sendesignalübersprechen oder Körperschall abgeklungen sind, bevor das Nutzsignal 36 empfangen wird. Gleichzeitig muss sichergestellt werden, dass Echos 34 hinreichend viel später empfangen werden als das Nutzsignal 36. Das Kriterium für die Echos 34 erfüllt in der Regel dasjenige für parasitäre Signalanteile 40 automatisch mit.

Es sind verschiedene Definitionen denkbar, wann es keine Überlagerung mehr gibt. Hier wird als vorteilhafte Ausführungsform eine für eine Zeitmessung mindestens nötige Anzahl $n_\tau$ an Signalperioden der Periodendauer $\tau$ der Ultraschallfrequenz angesetzt, die von dem Nutzsignal 36 ungestört empfangen werden müssen, bevor das erste Echo 34 ankommt. Für spätere Echos ist die zeitliche Separation dann erst recht gegeben.

Die Laufzeit des Nutzsignals beträgt

$$t_{primär} = \frac{L}{C_0},$$

wobei $C_0$ die Schallgeschwindigkeit in dem Fluid in der Prüfkammer 12 ist. Das erste Echo 34 muss diesen Weg zweimal hin und einmal her zurückle-

$$t_{Echo} = \frac{3*L}{C_0},$$

gen, also ist . Für den zeitlichen Abstand soll gelten $t_{Echo} - t_{primär} > s * \tau * n_\tau$. Dabei ist s ein Sicherheits- oder Toleranzfaktor, der beispielsweise zu s = 1,5 gewählt werden kann.

Daraus ergibt sich insgesamt die Bedingung

$$L > s * \tau * n_\tau * \frac{C_0}{2}.$$

Bei entsprechender Auslegung der Prüfkammer 12 sind folglich Nutzsignal 36 und Echo 34 im Empfangssignal voneinander ausreichend zeitlich separiert.

Für den sekundären Schallpfad 32 hingegen wird die zeitliche Separation der sekundären Ultraschallsignale durch ausreichenden Abstand a sichergestellt. Dabei wird nur der Schallpfad mit einer Reflexion betrachtet, da weitere Reflexionen nur zu zusätzlichen Verlängerungen führen. Die Laufzeit auf dem sekundären

$$t_{sekundär} = \frac{2*\sqrt{\frac{L^2}{4}+a^2}}{C_0}.$$

Schallpfad 32 beträgt

Analog der Bedingung an L im Falle des Echos 34 soll $t_{sekundär} - t_{primär} > s * \tau * n_\tau$ gelten. Somit folgt die

$$a > \sqrt{\frac{(C_0*\tau*n_\tau*s+L)^2}{4}}.$$

Bedingung . Bei entsprechender Auslegung der Prüfkammer 12 sind folglich Nutzsignal 36 und sekundäre Ultraschallsignale im Empfangssignal voneinander ausreichend zeitlich separiert.

Das L gibt die kürzest mögliche Längsausdehnung, das a die kleinste Querausdehnung beziehungsweise den kleinsten Radius an, mit der die zeitliche Separation erreichbar ist. Es ist besonders vorteilhaft, wenn die Bedingungen an die Länge L und den Abstand a zugleich als Höchstwerte aufgefasst werden, also aus dem jeweiligen ">" ein "=" wird. Dann werden nämlich die Abmessungen der Prüfkammer 12 und deren Volumen minimiert, während zugleich die zeitliche Separation des Nutzsignals 36 gewährleistet bleibt.

Ein kleines Volumen ist nicht nur wegen der Baugröße der Prüfvorrichtung 10 anzustreben. Dadurch werden außerdem die Fluid- oder Luftbewegungen im Inneren und somit Konvektionsströmungen reduziert, und die kleinere Oberfläche verringert den thermischen Einfluss der Umgebung auf das Fluid in der Prüfkammer 12. Durch eine Geometrie, die den beiden Formeln

$$L = s * \tau * n_\tau * \frac{c_0}{2} \qquad \text{und} \qquad a = \sqrt{\frac{(C_0*\tau*n_\tau*s+L)^2}{4}}$$

genügt, ergibt sich somit ein Optimum von Vermeidung von akustischen Störsignalen und gleichzeitig minimalem Volumen. Wird nur eine Bedingung eingehalten, so wird zumindest ein Störeinfluss auf das Nutzsignal 36 ausgeschlossen, also derjenige von Echos 34 oder von sekundären Ultraschallsignalen. Ein Abweichen von dem Gleichheitszeichen nach oben oder unten verschiebt das Optimum in Richtung auf größere Volumina bei noch stärkerer zeitlicher Separierung, die aber nach dem Gesagten kaum noch praktische Auswirkungen hat, oder auf kleinere Volumina um den Preis einer unvollständigen Störseparation.

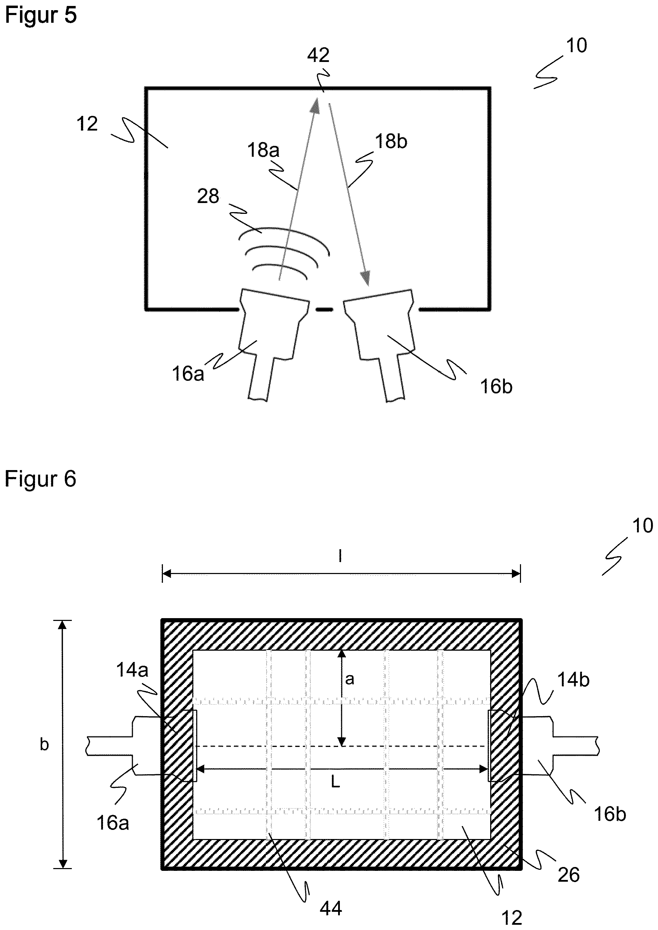

Figur 5 zeigt schematisch eine weitere Ausführungsform der Prüfvorrichtung 10 mit einer alternativen Pfadanordnung in Reflexion. Darstellungsbedingt ist die Anordnung gegenüber der Figur 1 um 90° gedreht, was aber keinerlei technische Bedeutung hat, da die Ausrichtung ohnehin in allen Figuren nur schematisch zu verstehen ist.

Bisher lag der Ultraschallmesspfad 18 auf der unmittelbaren Verbindungslinie zwischen gegenüberliegenden Ultraschallwandlern 16a-b. Bei einer Pfadanordnung in Reflexion wird das Ultraschallsignal 28 stattdessen gegen die Wand gesendet und dort nach Reflexion auf den empfangenden Ultraschallwandler 16b-a geführt. Der Ultraschallmesspfad wird somit zweiteilig mit einem ersten Anteil 18a und einem zweiten, reflektierten Anteil 18b. Über die Reflexion sind die Ultraschallwandler 16a-b weiterhin zumindest mittelbar mit einer längs des Ultraschallmesspfades 18a-b verlaufenden Verbindungslinie aufeinander ausgerichtet, und der zweigeteilte Ultraschallmesspfad 18a-b stellt hier den primären Schallpfad dar. Im Bereich der Reflexion ist ein Reflektor 42 vorgesehen, oder hier dient die Wand selbst als Reflektor, beispielsweise indem hier auf schalldämpfendes Material 26 verzichtet wird.

Die reflexive Ausführungsform gemäß Figur 5 hat bei kleinerer Bauform einen längeren primären Schallpfad, wodurch parasitäres Übersprechen und ähnliche Effekte besser ausgeblendet werden können. Mit der Länge l der Prüfkammer reduziert sich auch die Gesamtlänge der Prüfvorrichtung 10. Die Bestimmung der Pfadlänge L ist allerdings etwas aufwändiger.

Figur 6 zeigt eine schematische Darstellung einer weiteren Ausführungsform der Prüfvorrichtung 10. In dieser Ausführungsform sind zusätzliche Trennelemente 44 im Inneren der Prüfkammer 12 vorgesehen, die das Kammervolumen in kleinere Teile separieren. Wie schon diskutiert, ist für die Qualität des Messergebnisses die Unterdrückung von Konvektion im Inneren der Prüfkammer 12 von Vorteil, ebenso die Vermeidung einer durch äußere Einflüsse wieder induzierten Konvektion. Die Trennelemente 44 unterdrücken Konvektion durch die verkleinerten Raumvolumina, denn auftretende Konvektionen können sich nicht mehr über die Gesamtheit des Volumens in der Prüfkammer 12ausprägen

Die Folge sind kürzere Beruhigungszeiten und ein geringerer äußerer Einfluss. Ein weiterer Vorteil der Einbringung der Trennelemente 44 besteht darin, dass eventuell doch auftretende Konvektionen in jedem Teilvolumen unterschiedlich und unabhängig sind. Das führt dann bei der Messung zu einer gewissen Mittelung der Effekte in den einzelnen Teilvolumina, und dadurch wird der Konvektionseinfluss zumindest teilkompensiert und so weiter verringert.

Die Trennelemente 44 sind vorzugsweise als schalldurchlässige Membranen ausgebildet, beispielsweise Papier beziehungsweise Gaze. Die Stärke der Membranen wird vorteilhafterweise so gewählt, dass dadurch die Laufzeiten der Ultraschallsignale nicht oder nur geringstmöglich beeinflusst werden. Denkbar ist auch, den Einfluss der Trennelemente 44 auf die Laufzeiten zu bestimmen und vom Messergebnis abzuziehen.

**Patentansprüche**

1. Mitführbare Prüfvorrichtung (10) für einen Ultraschalldurchflussmesser, die eine Prüfkammer (12) mit einem Fluid bei Strömungsgeschwindigkeit Null und mit einem ersten Montageplatz (14a) für einen ersten Ultraschallwandler (16a) und einem zweiten Montageplatz (14b) für einen zweiten Ultraschallwandler (16b) des Ultraschalldurchflussmessers aufweist, so dass die Ultraschallwandler (16a-b) in montiertem Zustand mindestens mittelbar aufeinander gerichtet sind und auf der geradlinigen oder vermittelt durch einen Ultraschallreflektor (42) geknickten Verbindungslinie einen Ultraschallmesspfad (18) durch die Prüfkammer (12) aufspannen,

   dass die Prüfkammer (12) eine Geometrie aufweist, bei der Anforderungen an die Länge L des Ultraschallmesspfades und/oder den Abstand a des Ultraschallmesspfades zu den Seitenwänden erfüllt sind, wobei Länge L und Abstand a durch die Anordnung der Montageplätze bestimmt sind,
   nämlich die Länge L der Bedingung

   $$L \geq s * \tau * n_\tau * \frac{c_0}{2}$$ genügt und so groß genug ist, damit ein direktes Ultraschallsignal (36) von dem ersten Ultraschallwandler (16a) zu dem zweiten Ultraschallwandler (16b) zeitlich separiert von späteren Echos (38, 34) ist, wobei spätere Echos (34) Signalanteile sind, die zunächst an dem empfangenden Ultraschallwandler (16b-a) oder der umgebenden Wand und dann auf Seiten des sendenden Ultraschallwandlers (16a-b) erneut reflektiert werden, und/oder der Abstand a der Bedingung

$$a \geq \sqrt{\frac{(C_0 * \tau * n_\tau * s + L)^2}{4}}$$ genügt und so groß genug ist, damit das direkte Ultraschallsignal (34) auf dem Ultraschallmesspfad (18) zeitlich separiert von sekundären Ultraschallsignalen (38, 32) ist, die nicht auf dem Ultraschallmesspfad (18) propagieren,

mit Schallgeschwindigkeit $c_0$, einem Sicherheitsfaktor s, insbesondere s=1,5, und Ultraschallsignalen mit $n_\tau$ Perioden der Periodendauer $\tau$.

2. Mitführbare Prüfvorrichtung (10) nach Anspruch 1, wobei die Prüfkammer (12) ein minimales Volumen aufweist, d.h. die Abmessungen nur gerade so groß sind, dass die Bedingungen an Länge L des Ultraschallmesspfades (18) und Abstand a des Ultraschallmesspfades (18) zu den Seitenwänden erfüllt sind.

3. Mitführbare Prüfvorrichtung (10) nach Anspruch 1 oder 2,
   wobei die Montageplätze (14a-b) und folglich der Ultraschallmesspfad (18) mittig in der Prüfkammer (12) angeordnet sind.

4. Mitführbare Prüfvorrichtung (10) nach einem der vorhergehenden Ansprüche
   wobei die Prüfkammer (12) an ihren Wänden ein schalldämpfendes Material (26) aufweist.

5. Mitführbare Prüfvorrichtung (10) nach einem der vorhergehenden Ansprüche
   wobei die Prüfkammer (12) nicht-ebene Seitenflächen aufweist, insbesondere zylinderförmig ausgebildet ist.

6. Mitführbare Prüfvorrichtung (10) nach einem der vorhergehenden Ansprüche
   wobei die Prüfkammer (12) aus einem nicht-metallischen Material hergestellt ist, insbesondere aus Kunststoff.

7. Mitführbare Prüfvorrichtung (10) nach einem der vorhergehenden Ansprüche
   wobei in der Prüfkammer (12) mindestens ein Trennelement (44) angeordnet ist, wobei das Trennelement (44) insbesondere schalldurchlässig ist.

**8.** Mitführbare Prüfvorrichtung (10) nach einem der vorhergehenden Ansprüche
die einen Drucksensor (20), einen Temperatursensor (22) und/oder einen Feuchtigkeitssensor (24) aufweist, wobei die Prüfvorrichtung (10) insbesondere eine Steuer- und Auswertungseinheit (48) aufweist, die dafür ausgebildet ist, eine Schallgeschwindigkeit für das Fluid in der Prüfkammer (12) zu berechnen.

**9.** Mitführbare Prüfvorrichtung (10) nach einem der vorhergehenden Ansprüche
die eine Schnittstelle (46, 48) aufweist, um Messwerte des Ultraschalldurchflussmessers zu empfangen, insbesondere eine gemessene Strömungsgeschwindigkeit oder Schallgeschwindigkeit, und/oder dem Ultraschalldurchflussmesser Parameter zu übergeben, insbesondere die Länge L des Ultraschallmesspfades (18).

**10.** Mitführbare Prüfvorrichtung (10) nach einem der vorhergehenden Ansprüche
die eine Steuer- und Auswertungseinheit (48) aufweist, die dafür ausgebildet ist, eine in der Prüfkammer (12) gemessene Strömungsgeschwindigkeit mit Null und/oder eine in der Prüfkammer (12) gemessene Schallgeschwindigkeit mit einer erwarteten Schallgeschwindigkeit zu vergleichen.

**11.** Mitführbare Prüfvorrichtung (10) nach einem der vorhergehenden Ansprüche
wobei die Montageplätze (14a-b) an gegenüberliegenden Wänden der Prüfkammer (12) angeordnet sind oder wobei die Montageplätze (14a-b) an derselben Wand der Prüfkammer (12) angeordnet sind und ein Ultraschallreflektor (42) an der gegenüberliegenden Wand der Prüfkammer (12) angeordnet ist.

**12.** Mitführbare Prüfvorrichtung (10) nach einem der vorhergehenden Ansprüche
die zweiteilig mit einem ersten Teil und einem zweiten Teil der Prüfkammer (12) ausgebildet ist, so dass diese geöffnet und geschlossen werden kann und/oder wobei die Prüfvorrichtung (10) Abmessungen und ein Gewicht aufweist, mit der sie von einer Person aus eigener Kraft transportiert werden kann.

**13.** Verfahren zum Prüfen und/oder Kalibrieren eines Ultraschalldurchflussmessers, insbesondere mit einer mitführbaren Prüfvorrichtung (10) nach einem der vorhergehenden Ansprüche, wobei in einer Prüfkammer (12) mit einem Fluid bei Strömungsgeschwindigkeit Null ein erster Ultraschallwandler (16a) des Ultraschalldurchflussmessers auf einem ersten Montageplatz (14a) und ein zweiter Ultraschallwandler (16b) des Ultraschalldurchflussmessers auf einem zweiten Montageplatz (14b) montiert wird, so dass die Ultraschallwandler (16a-b) mindestens mittelbar aufeinander gerichtet sind und auf der geradlinigen oder vermittelt durch einen Ultraschallreflektor (42) geknickten Verbindungslinie einen Ultraschallmesspfad (18) durch die Prüfkammer (12) aufspannen, und wobei dann mit dem Ultraschalldurchflussmesser die Strömungsgeschwindigkeit und/oder die Schallgeschwindigkeit in der Prüfkammer gemessen wird,

dass aufgrund der Geometrie der Prüfkammer (12) und der Anordnung der Montageplätze (14a-b) die Länge L des Ultraschallmesspfades (18) groß genug ist, damit ein direktes Ultraschallsignal (36) von dem ersten Ultraschallwandler (16a) zu dem zweiten Ultraschallwandler (16b) zeitlich separiert von späteren Echos (38, 34) ist, indem die Länge L der Bedingung

$$L \geq s * \tau * n_\tau * \frac{c_0}{2}$$ genügt, wobei spätere Echos (34) Signalanteile sind, die zunächst an dem empfangenden Ultraschallwandler (16b-a) oder der umgebenden Wand und dann auf Seiten des sendenden Ultraschallwandlers (16a-b) erneut reflektiert werden, und/oder der Abstand a des Ultraschallmesspfades (18) zu den Seitenwänden groß genug ist, damit das direkte Ultraschallsignal (34) auf dem Ultraschallmesspfad (18) zeitlich separiert von sekundären Ultraschallsignalen (38, 32) ist, die nicht auf dem Ultraschallmesspfad (18) propagieren, indem der Abstand a der Bedingung

$$a \geq \sqrt{\frac{(C_0 * \tau * n_\tau * s + L)^2}{4}}$$ genügt,
mit Schallgeschwindigkeit $c_0$, einem Sicherheitsfaktor s, insbesondere s=1,5, und Ultraschallsignalen mit $n_\tau$ Perioden der Periodendauer er $\tau$.

**Claims**

**1.** A portable inspection device (10) for an ultrasonic flowmeter, comprising an inspection chamber (12) having a fluid at zero flow velocity and having a first mounting location (14a) for a first ultrasonic transducer (16a) and a second mounting location (14b) for a second ultrasonic transducer (16b) of the ultrasonic flowmeter, so that the ultrasonic transducers (16a-b) are at least indirectly directed towards each other in the mounted state and generate an ultrasonic measurement path (18) through the inspection chamber (12) on the straight connecting line or the bent connecting line mediated by an ultrasonic reflector (42), that the inspection chamber (12) has a geometry wherein requirements for the length L of the ultrasonic measurement path and/or the distance a of the ultrasonic measurement path to the side walls are fulfilled, length L and distance a being determined by the arrangement of the mounting locations, namely the length L satisfies the condition

$$L \geq s * \tau * n_\tau * \frac{c_0}{2}$$ and is large enough so that a direct ultrasonic signal (36) from the first ultrasonic transducer (16a) to the second ultrasonic transducer (16b) is separated in time from later echoes (38, 34), later echoes (34) being signal components which are at first reflected at the receiving ultrasonic transducer (16b-a) or the surrounding wall and then reflected again on the side of the transmitting ultrasonic transducer (16a-b),

and/or the distance a satisfies the condition

$$a \geq \sqrt{\frac{(C_0 * \tau * n_\tau * s + L)^2}{4}}$$ and is large enough so that the direct ultrasonic signal (34) on the ultrasonic measurement path (18) is separated in time from secondary ultrasonic signals (38, 32) that do not propagate on the ultrasonic measurement path (18),
with sound velocity $c_0$, a safety factor s, in particular s=1.5, and ultrasonic signals having $n_\tau$ periods of the period duration $\tau$.

2. The portable inspection device (10) according to claim 1,
wherein the inspection chamber (12) has a minimum volume, i.e. the dimensions are only just large enough to satisfy the conditions of length L of the ultrasonic measuring path (18) and distance a of the ultrasonic measuring path (18) to the side walls.

3. The portable inspection device (10) according to claim 1 or 2,
wherein the mounting locations (14a-b) and consequently the ultrasonic measurement path (18) are arranged centrally in the inspection chamber (12).

4. The portable inspection device (10) according to any of the preceding claims, wherein the inspection chamber (12) has a sound-absorbing material (26) on its walls.

5. The portable inspection device (10) according to any of the preceding claims, wherein the inspection chamber (12) has non-planar side surfaces, in particular is cylindrical in shape.

6. The portable inspection device (10) according to any of the preceding claims, wherein the inspection chamber (12) is made of a non-metallic material, in particular plastic.

7. The portable inspection device (10) according to any of the preceding claims, wherein at least one separating element (44) is arranged in the inspection chamber (12), wherein the separating element (44) in particular is sound-permeable.

8. The portable inspection device (10) according to any of the preceding claims, comprising a pressure sensor (20), a temperature sensor (22) and/or a humidity sensor (24), wherein the inspection device (10) in particular comprises a control and evaluation unit (48) configured to calculate a sonic velocity for the fluid in the inspection chamber (12).

9. The portable inspection device (10) according to any of the preceding claims, comprising has an interface (46, 48) for receiving measured values of the ultrasonic flowmeter, in particular a measured flow velocity or sound velocity, and/or for transferring parameters to the ultrasonic flowmeter, in particular the length L of the ultrasonic measurement path (18).

10. The portable inspection device (10) according to any of the preceding claims, comprising a control and evaluation unit (48) configured to compare a flow velocity measured in the inspection chamber (12) with zero and/or a sound velocity measured in the inspection chamber (12) with an expected sound velocity.

11. The portable inspection device (10) according to any of the preceding claims, wherein the mounting locations (14a-b) are arranged on opposite walls of the inspection chamber (12) or wherein the mounting locations (14a-b) are arranged on the same wall of the inspection chamber (12) and an ultrasonic reflector (42) is arranged on the opposite wall of the inspection chamber (12).

12. The portable inspection device (10) according to any of the preceding claims, that is formed in two parts with a first part and a second part of the inspection chamber (12) so that it can be opened and closed and/or wherein the inspection device (10) has dimensions and a weight so that it can be transported by a person under his own power.

13. A method for inspecting and/or calibrating an ultrasonic flowmeter, in particular using a portable inspection device (10) according to any of the preceding claims, wherein in an inspection chamber (12) having a fluid at zero flow velocity a first ultrasonic transducer (16a) of the ultrasonic flowmeter is mounted on a first mounting location (14a) and a second ultrasonic transducer (16b) of the ultrasonic flowmeter is mounted on a second mounting location (14b), so that the ultrasonic transducers (16a-b) are at least indirectly directed towards each other and generate an ultrasonic measurement path (18) through the inspection chamber (12) on the straight connecting line or the bent connecting line mediated by an ultrasonic reflector (42), and wherein the ultrasonic flowmeter is then used to measure the flow velocity and/or the sound velocity in the inspection chamber, that due to the geometry of the inspection chamber (12) and the arrangement of the mounting locations (14a-b) the length L of the ultrasonic measurement path (18) is large enough for a direct ultrasonic signal (36) from the first ultrasonic transducer (16a) to the second ultrasonic transducer (16b) to be separated in time from later echoes (38, 34) in that the length L satisfies the condition

$$L \geq s * \tau * n_\tau * \frac{c_0}{2}$$ where later echoes (34) are signal components which are at first reflected at the receiving ultrasonic transducer (16b-a) or the surrounding wall and then reflected again on the side of the transmitting ultrasonic transducer (16a-b),

and/or the distance a of the ultrasonic measurement path (18) to the side walls is large enough for the direct ultrasonic signal (34) on the ultrasonic measurement path (18) to be separated in time from secondary ultrasonic signals (38, 32) that do not propagate on the ultrasonic measurement path (18) in that the distance a satisfies the condition of $$a \geq \sqrt{\frac{(C_0 * \tau * n_\tau * s + L)^2}{4}}$$ ,

with sound velocity $c_0$ a safety factor s, in particular s=1.5, and ultrasonic signals having $n_\tau$ periods of the period duration $\tau$.

## Revendications

1. Dispositif d'inspection portable (10) pour un débitmètre à ultrasons, comprenant une chambre d'inspection (12) contenant un fluide à vitesse d'écoulement nulle et comportant un premier emplacement de montage (14a) pour un premier transducteur à ultrasons (16a) et un deuxième emplacement de montage (14b) pour un deuxième transducteur à ultrasons (16b) du débitmètre à ultrasons, de sorte que les transducteurs à ultrasons (16a- b) soient au moins indirectement dirigés l'un vers l'autre à l'état monté et génèrent un trajet de mesure à ultrasons (18) à travers la chambre d'inspection (12) sur la ligne de connexion droite ou la ligne de connexion coudée par l'intermédiaire d'un réflecteur à ultrasons (42), en ce que la chambre d'inspection (12) comprend une géométrie dans laquelle les exigences relatives à la longueur L du trajet de mesure à ultrasons et/ou à la distance a du trajet de mesure à ultrasons par rapport aux parois latérales sont remplies, la longueur L et la distance a étant déterminées par la disposition des emplacements de montage, à savoir que la longueur L satisfait à la condition

$$L \geq s * \tau * n_\tau * \frac{c_0}{2}$$ et est suffisamment grande pour qu'un signal ultrasonore direct (36) du premier transducteur à ultrasons (16a) au deuxième transducteur à ultrasons (16b) soit séparé dans le temps d'échos ultérieurs (38, 34), dans lequel les échos ultérieurs (34) étant des composantes du signal qui sont d'abord réfléchies sur le transducteur à ultrasons récepteur (16b- a) ou sur la paroi environnante, puis à nouveau sur les côtés du transducteur à ultrasons émetteur (16a b),

et/ou la distance a satisfait à la condition

$$a \geq \sqrt{\frac{(C_0 * \tau * n_\tau * s + L)^2}{4}}$$ et est suffisamment grande pour que le signal ultrasonore direct (34) sur le trajet de mesure à ultrasons (18) soit séparé dans le temps des signaux ultrasonores secondaires (38, 32) qui ne se propagent pas sur le trajet de mesure à ultrasons (18),
avec la vitesse du son $c_0$, un facteur de sécurité s, en particulier s=1,5, et des signaux ultrasonores avec $n_\tau$ périodes de la durée de la période $\tau$.

2. Dispositif d'inspection portable (10) selon la revendication 1,
dans lequel la chambre d'inspection (12) comprend un volume minimal, c'est-à-dire que les dimensions sont juste assez grandes pour que les conditions de longueur L du trajet de mesure à ultrasons (18) et de distance a du trajet de mesure à ultrasons (18) par rapport aux parois latérales soient remplies.

3. Dispositif d'inspection portable (10) selon la revendication 1 ou 2,
dans lequel les emplacements de montage (14a- b) et, par conséquent, le trajet de mesure à ultrasons (18) sont disposés au centre de la chambre d'inspection (12).

4. Dispositif d'inspection portable (10) selon l'une des revendications précédentes, dans lequel la chambre d'inspection (12) comprend un matériau insonorisant (26) sur ses parois.

5. Dispositif d'inspection portable (10) selon l'une des revendications précédentes, dans lequel la chambre d'inspection (12) comprend des surfaces latérales non planes, en particulier est de forme cylindrique.

6. Dispositif d'inspection portable (10) selon l'une des revendications précédentes, dans lequel la chambre d'inspection (12) est fabriquée en un matériau non métallique, en particulier en plastique.

7. Dispositif d'inspection portable (10) selon l'une des revendications précédentes, dans lequel au moins un élément de séparation (44) est disposé dans la chambre d'inspection (12), l'élément de séparation (44) étant en particulier perméable au son.

8. Dispositif d'inspection portable (10) selon l'une des revendications précédentes, comprenant un capteur de pression (20), un capteur de température (22) et/ou un capteur d'humidité (24), dans lequel le dispositif d'inspection (10) comprend en particulier une unité de commande et d'évaluation (48) configurée pour calculer une vitesse du son pour le fluide dans la chambre d'inspection (12).

9. Dispositif d'inspection portable (10) selon l'une des revendications précédentes, comprenant une interface (46, 48) pour recevoir des valeurs mesurées du débitmètre à ultrasons, en particulier une vitesse d'écoulement mesurée ou une vitesse du son, et/ou pour transférer des paramètres au débitmètre à ultrasons, en particulier la longueur L du trajet de mesure à ultrasons (18).

10. Dispositif d'inspection portable (10) selon l'une des revendications précédentes, comprenant une unité de commande et d'évaluation (48) configurée pour comparer une vitesse d'écoulement mesurée dans la chambre d'inspection (12) à zéro et/ou une vitesse du son mesurée dans la chambre d'inspection (12) à une vitesse du son attendue.

11. Dispositif d'inspection portable (10) selon l'une des revendications précédentes, dans lequel les emplacements de montage (14a- b) sont disposés sur des parois opposées de la chambre d'inspection (12) ou dans lequel les emplacements de montage (14a- b) sont disposés sur la même paroi de la chambre d'inspection (12) et un réflecteur à ultrasons (42) est disposé sur la paroi opposée de la chambre d'inspection (12).

12. Dispositif d'inspection portable (10) selon l'une des revendications précédentes, qui est formé en deux parties avec une première partie et une deuxième partie de la chambre d'inspection (12) de sorte que celle-ci peut être ouverte et fermée et/ou dans lequel le dispositif d'inspection (10) comporte des dimensions et un poids tels qu'il peut être transporté par une personne par ses propres moyens.

13. Procédé d'inspection et/ou du calibrage d'un débitmètre à ultrasons, en particulier avec un dispositif d'inspection portable (10) selon l'une des revendications précédentes, dans lequel dans une chambre d'inspection (12) contenant un fluide à vitesse d'écoulement nulle, un premier transducteur à ultrasons (16a) du débitmètre à ultrasons est monté sur un premier emplacement de montage (14a) et un deuxième transducteur à ultrasons (16b) du débitmètre à ultrasons est monté sur un deuxième emplacement de montage (14b), de sorte que les transducteurs à ultrasons (16a- b) soient au moins indirectement dirigés l'un vers l'autre et génèrent un trajet de mesure à ultrasons (18) à travers la chambre d'inspection (12) sur la ligne de connexion rectiligne ou la ligne de connexion coudée par l'intermédiaire d'un réflecteur à ultrasons (42), et dans lequel la vitesse d'écoulement et/ou la vitesse du son dans la chambre d'inspection est ensuite mesurée à l'aide du débitmètre à ultrasons, en ce que, en raison de la géométrie de la chambre d'inspection (12) et de la disposition des emplacements de montage (14ab-), la longueur L du trajet de mesure à ultrasons (18) est suffisamment grande pour qu'un signal ultrasonore direct (36) du premier transducteur à ultrasons (16a) au deuxième transducteur à ultrasons (16b) soit séparé dans le temps des échos ultérieurs (38, 34), en ce que la longueur L satisfait à la con-

$$L \geq s * \tau * n_\tau * \frac{c_0}{2}$$

dition dans lequel les échos ultérieurs (34) étant des composantes du signal qui sont d'abord réfléchies sur le transducteur à ultrasons récepteur (16b- a) ou sur la paroi environnante, puis à nouveau sur les côtés du transducteur à ultrasons émetteur (16a b),

et/ou la distance a entre le trajet de mesure à ultrasons (18) et les parois latérales est suffisamment grande pour que le signal ultrasonore direct (34) sur le trajet de mesure à ultrasons (18) soit séparé dans le temps des signaux ultrasonores secondaires (38, 32) qui ne se propagent pas sur le trajet de mesure à ultrasons (18), en ce que la distance a satisfait à la con-

$$a \geq \sqrt{\frac{(C_0 * \tau * n_\tau * s + L)^2}{4}}$$

dition avec la vitesse du son $c_0$, un facteur de sécurité s, en particulier s=1,5, et des signaux ultrasonores avec $n_\tau$ périodes de la durée de la période $\tau$.

Figur 1

Figur 2

## Figur 3

## Figur 4

## Figur 5

## Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013006090 A1
- US 5277070 A
- EP 3521773 A1

- WO 9600375 A1
- DE 102008026620 A1
- US 2009007625 A1